# EUROPEAN PATENT SPECIFICATION

(11) **EP 2 645 685 B1**
(45) Date of publication and mention of the grant of the patent: **26.07.2017**
(21) Application number: 11853258.9
(22) Date of filing: 20.12.2011
(51) Int. Cl.: H04M 1/725, G11B 27/031, G11B 27/34, G11B 19/02, G11B 27/034, G06F 3/0484

(54) **METHOD AND CELL PHONE FOR CAPTURING AUDIO FILE OR VIDEO FILE**
VERFAHREN UND MOBILTELEFON ZUR AUFNAHME VON AUDIO- ODER VIDEODATEIEN
PROCÉDÉ ET TÉLÉPHONE CELLULAIRE PERMETTANT DE CAPTURER UN FICHIER AUDIO OU UN FICHIER VIDÉO

(30) Priority: 27.12.2010 CN 201010606849
(43) Date of publication of application: 02.10.2013
(73) Proprietor: Huawei Device Co., Ltd., Longgang District Shenzhen Guangdong 518129 (CN)
(72) Inventor: YANG, Chunhui, Guangdong 518129 (CN); TIAN, Dazhang, Guangdong 518129 (CN); HE, Xiaodi, Guangdong 518129 (CN)
(74) Representative: Körber, Martin Hans
(86) International application number: PCT/CN2011/084291
(87) International publication number: WO 2012/089049

(56) References cited:
- EP-A2- 1 785 997
- CN-A- 1 710 977
- CN-A- 101 345 790
- CN-A- 101 477 824
- CN-A- 101 740 084
- CN-A- 102 176 731
- US-A1- 2007 238 340

## Description

### FIELD OF THE INVENTION

The present invention relates to the field of communication technologies, and in particular, to a method and a mobile phone for capturing an audio file or a video file.

### BACKGROUND OF THE INVENTION

As functions of wireless mobile devices such as a mobile phone change quickly, mobile phones become indispensable mobile communication tools for people on a trip. At present, a mobile phone normally has a function of playing an audio file or a video file. For example, in a process of listening to music, a user wants to capture a music segment as a ring tone of the mobile phone. The user interface operations are complex and complicated, and the user needs to perform multiple operations to implement the function and cannot simply and conveniently capture an audio file or a video file.

EP 1 785 997 A2 discloses a digital audio recording/reproduction apparatus for recording and reproducing still image and video and a method for providing a user face therein. Specifically, the apparatus and method allow to record music reproduced by an external device by pressing a recording button for a relatively long time. If the recording button is pressed during the recording, the recording stops and the music file is created.

### SUMMARY OF THE INVENTION

In view of this, embodiments of the present invention provide a method and a mobile phone for capturing an audio file or a video file, so as to capture an audio file or a video file simply and conveniently.

In order to solve the above technical problem, in one aspect, a method for capturing an audio file or a video file is provided, including:
A method for capturing an audio file or a video file in a mobile phone. The method comprises in a process of playing an audio file or a video file, when a long-press event on a trackball displaying a play progress is received, starting capturing the audio file or video file. Moreover, the method comprises in a process of capturing the audio file or video file, when a long-press event on the trackball displaying a play progress is received, stopping capturing, saving the captured audio file or video file. The method moreover comprises, when starting capturing the audio file or video file or in the process of starting capturing the audio file or video file, outputting a capture prompt, wherein the capture prompt comprises at least one of changing a color of the trackball before and after starting capturing, displaying a capture progress on a display screen of the mobile phone, or displaying a capture state on the display screen of the mobile phone. Before the starting capturing the audio file or video file, or after the starting capturing the audio file or video file, or in a process of starting capturing the audio file or video file, the method further comprises obtaining at least one of a play identifier of the audio file or video file, a play path of the audio file or video file, a source file name of the audio file or video file, and time for starting capturing the audio file or video file.

In another aspect, a mobile phone, comprising a display screen, configured to display an application interface and/or receive an operation, a start-capturing module, configured to: in a process of playing an audio file or a video file, when a long-press event on a trackball displaying a play progress on the display screen is received, start capturing the audio file or video file, a stop-capturing module , configured to: in a process of capturing the audio file or video file, when a long-press event on the trackball displaying a play progress is received, stop capturing, and a saving module, configured to save the captured audio file or video file; an output prompting module, configured to output a capture prompt. The output prompting module at least comprises any one of following modules:
a first output prompting module, configured to display a capture progress on the display screen of the mobile phone,
a second output prompting module, configured to display a capture state on the display screen of the mobile phone;
a third output prompting module, configured to change a color of the trackball before and after starting capturing. The mobile phone further comprises an obtaining module, configured to obtain at least one of a play identifier of the audio file or video file, a play path of the audio file or video file, a source file name of the audio file or video file, time for starting capturing the audio file or video file, and time for stopping capturing the audio file or video file.

With the method and mobile phone for capturing an audio file or a video file according to the embodiments of the present invention, an audio file or a video file is captured simply and conveniently.

### BRIEF DESCRIPTION OF THE DRAWINGS

To describe the technical solutions in the embodiments of the present invention or in the prior art more clearly, the following briefly introduces the accompanying drawings required for describing the embodiments or the prior art. Apparently, the accompanying drawings in the following descriptions show merely some embodiments of the present invention, and persons of ordinary skill in the art may still derive other drawings from the accompanying drawings without creative efforts.
FIG. 1 is a schematic diagram of a method for capturing an audio file or a video file according to a first embodiment of the present invention;
FIG. 2 is a schematic diagram of another method for capturing an audio file or a video file according to a second embodiment of the present invention;
FIG. 3 is a schematic structural diagram of a mobile phone according to a third embodiment of the present invention;
FIG. 4 is another schematic structural diagram of a mobile phone according to a fourth embodiment of the present invention;
FIG. 5 is a schematic structural diagram of an output prompting module of a mobile phone according to the fourth embodiment of the present invention; and
FIG. 6 is a schematic diagram of a capture interface of a mobile phone in the first embodiment to the fourth embodiment of the present invention.

### DETAILED DESCRIPTION OF THE EMBODIMENTS

To make the objectives, technical solutions, and advantages of the present invention more comprehensible, the following further describes the present invention in detail with reference to the accompanying drawings and four embodiments.

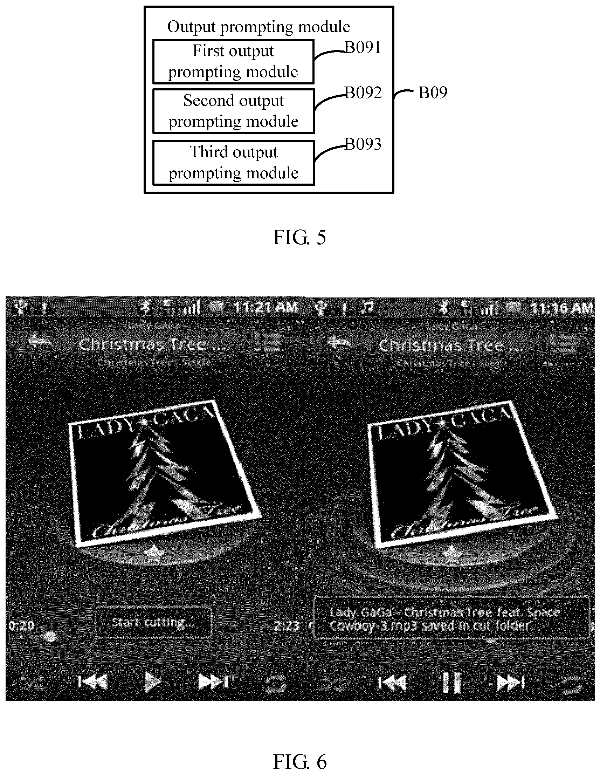

First, it should be noted that a mobile phone described in an embodiment of the present invention includes, but is not limited to, wireless handheld devices such as various standard mobile phones having a trackball, smart phones based on different operating systems, and personal digital assistants PDAs, and that a trackball in the embodiment of the present invention includes, but is not limited to, a front end of a play progress on a player on a touchscreen. FIG. 6 shows a front end displaying a play progress on a player. Of course, the trackball may also include a physical trackball or a navigation key configured on a touchscreen mobile phone or a mobile phone without a touchscreen, or a key in another shape and having functions of a trackball. It should be noted that there is a control relationship between the configured physical trackball or navigation key or the key in another shape and having functions of a trackball and a front end displaying a play progress of a player on a mobile phone. That is, when the configured physical trackball or navigation key or the key in another shape and having functions of a trackball is long pressed, it is equivalent to that the front end displaying the play progress of the player on the mobile phone is long pressed. In addition, it should be noted that an operating system of a mobile phone involved in an embodiment of the present invention includes, but is not limited to, Symbian OS, Windows Mobile, Linux, Palm OS, Mac OS X, Android, and Blackberry. In the embodiment of the present invention, the operating system of the mobile phone is exemplified by using an Android platform; however, the present invention is not limited thereto.

It should be noted that an audio file involved in the present invention includes music, musical compositions, lectures, and stories in various formats. The format of the audio file includes, but is not limited to, CD, WAVE (*.WAV), AIFF, AU, MP3, MIDI, WMA, RealAudio, VQF, OggVorbis, AAC, APE, MOV, and the like. The format of a video file includes, but is not limited to, an AVI, nAVI, DV-AVI, MPEG, MPEG-1, MPEG-2, MPEG-4, DivX, MOV, ASF, WMV, RM, RMVB, and the like.

A first embodiment of the present invention provides a method for capturing an audio file or a video file, which includes the following steps.

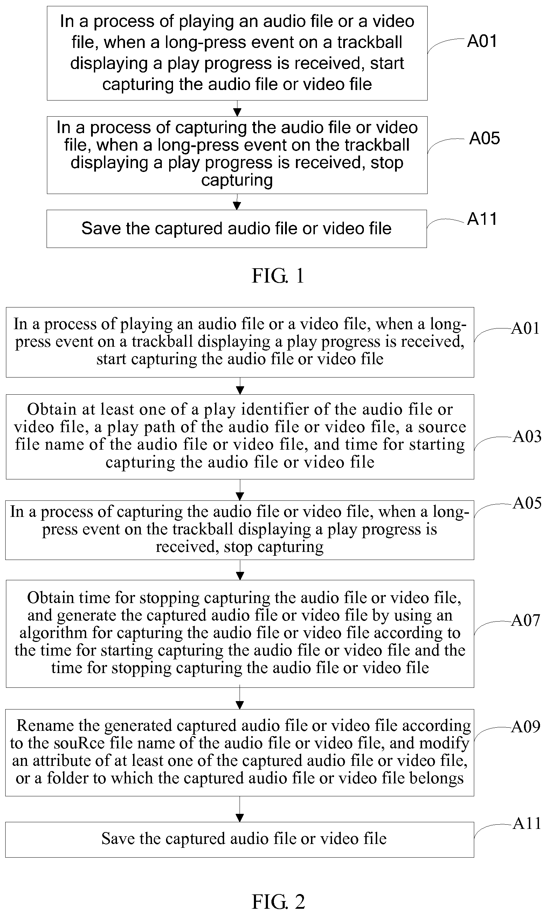

Referring to FIG. 1, a method for capturing an audio file or a video file in the embodiment specifically includes the following steps:
Step A01: In a process of playing an audio file or a video file, when a long-press event on a trackball displaying a play progress is received, start capturing the audio file or video file.

A trackball displaying a play progress on a player in a touchscreen mobile phone using an Android platform as an operating system does not support long pressing, and special processing at an application layer is required. If the operating system of another mobile phone supports the long pressing of a trackball displaying a play progress on a player, no special processing at an application layer is required.

When a keydown (keydown) event on the trackball displaying the play progress on the player is received, a module, or unit, or processor, or chip of a trackball displaying a play progress on a processing player of a mobile phone starts a timer having a preset time segment, for example, a preset time segment of 500 ms; starts a thread at the end time of the preset time segment or after the end time; determines whether the trackball is pressed down at the time; and if yes, determines that a long-press event occurs on the trackball and assigns a value true (true) to a flag bit of a long press. When the trackball of the mobile phone is released, an upper layer receives a keyup (keyup) event and performs a long-press operation. When the module, or unit, or processor, or chip of the processing trackball of the mobile phone receives the long-press event on the trackball, first determines whether the long-press event is a first long press or a second long press. A specific determining method may be determined by using a specific flag bit in the long-press event. The specific flag bit is not limited herein. When it is determined that the long-press event occurs on the trackball for the first time, the mobile phone starts capturing the audio file or video file.

It should be noted that, further, before starting capturing the audio file or video file, or after starting capturing the audio file or video file, or in the process of starting capturing the audio file or video file, the corresponding processor, or corresponding module, or corresponding unit, or corresponding chip of the mobile phone also performs the following step:
obtaining at least one of a play identifier of the audio file or video file, a play path of the audio file or video file, a source file name of the audio file or video file, and time for starting capturing the audio file or video file. For example, specifically, before starting capturing the audio file or video file, or after starting capturing the audio file or video file, or in the process of starting capturing the audio file or video file, the corresponding processor, or corresponding module, or corresponding unit, or corresponding chip of the mobile phone obtains a file name of the audio file or video file to be captured or a name of the audio file itself, such as a name of a song; and may also obtain a play path of the audio file or video file, a source file name of the audio file or video file, and time for starting capturing the audio file or video file, and further save at least one of the parameters obtained above, for example, save the time for starting capturing the audio file or video file.

Further, before starting capturing the audio file or video file, or after starting capturing the audio file or video file, or in the process of starting capturing the audio file or video file, the corresponding processor, or corresponding module, or corresponding unit, or corresponding chip of the mobile phone also performs the following step:
saving the time for starting capturing the audio file or video file.

Further, when starting capturing the audio file or video file or in the process of starting capturing the audio file or video file, the corresponding processor, or corresponding module, or corresponding unit, or corresponding chip of the mobile phone also performs the following step:
outputting a capture prompt, where the capture prompt includes at least one of changing a color or brightness of the trackball before and after starting capturing, displaying a capture progress on a display screen of the mobile phone, or displaying a capture state on the display screen of the mobile phone.

Changing the color of the trackball before and after starting capturing may specifically be as follows: The trackball has no color before starting capturing, and has a color after starting capturing; or the trackball is dark before starting capturing and becomes bright after starting capturing; or the trackball is light-colored before starting capturing and is dark-colored after starting capturing; or the color or brightness of the trackball before and after starting capturing has any other change.

Displaying the capture progress on the display screen of the mobile phone may specifically be: displaying a capture progress bar on the display screen of the mobile phone, and displaying one or more kinds of information including capture time, and the size, attribute, or name of the audio file or video file captured.

Displaying the capture state on the display screen of the mobile phone may specifically be: displaying a capture progress on an original interface of a player of the audio file or video file, and displaying one or more kinds of information including the capture time, the size, attribute, or name of the audio file or video file captured, whether the capturing is completed, a storage path, or the name of a storage folder; or when a new capture interface occurs, displaying the capture progress on the new capture interface, and displaying one or more kinds of information including the capture time, the size, attribute, or name of the audio file or video file captured, whether the capturing is completed, a storage path, or the name of a storage folder. As shown in FIG. 6, a diagram on the left prompts starting capturing, and a diagram on the right prompts a singer of a song, a name of the song, a name of an audio file where the song is located, a storage location, and the like.

Step A05: In a process of capturing the audio file or video file, when a long-press event on the trackball displaying a play progress is received, stop capturing.

During the process of capturing the audio file or video file, when the corresponding processor, or corresponding module, or corresponding unit, or corresponding chip of the mobile phone receives a long-press event on the trackball, it stops capturing. When a long-press event on the trackball is received, it may be first determined whether a first long-press event or a second long-press event occurs on the trackball. A specific determining method may be determined by using a specific flag bit in the long-press event. The specific flag bit is not limited herein. The second long-press event on the trackball is a long-press event on the trackball, received in the process of capturing the audio file or video file.

Step A11: Save the captured audio file or video file.

The corresponding processor, or corresponding module, or corresponding unit, or corresponding chip of the mobile phone saves the captured audio file or video file. It should be noted that the captured audio file or video file may be saved to a specific folder, or may be saved to a folder where an original audio file or video file is located. Before the captured audio file or video file is saved, the captured audio file or video file may be renamed based on the file name of the original audio file or video file. For example, a letter or a number may be added to or removed from the file name of the original audio file or video file. After the renaming step is added, a user may conveniently identify a relationship between the captured audio file or video file and the audio file or video file before capturing. Further, an attribute of the captured audio file or video file may be modified. For example, a read-only attribute of the captured audio file or video file may be changed to a read/write attribute. After the step of modifying an attribute is added, the attribute of the captured audio file or video file may be adjusted, thereby facilitating application and further processing.

With the method for capturing an audio or a video according to the embodiment of the present invention, an audio file or a video file can be captured simply and conveniently, and no major modification made to the user interface of the mobile phone is required, so that the technology is easy to implement, thereby reducing operation steps for a user and making operations easier for the user.

A second embodiment provided by the present invention provides another method for capturing an audio file or a video file, as shown in FIG. 2. First, an application scenario is the same as that of the first embodiment, and steps A01, A05, and A11 are the same as the corresponding steps in the first embodiment, and details are not described repeatedly herein.

Alternatively, after step A01, a corresponding processor, or a corresponding module, or a corresponding unit, or a corresponding chip of a mobile phone performs step A03, which is specifically as follows:
Step A03: Obtain at least one of a play identifier of the audio file or video file, a play path of the audio file or video file, a source file name of the audio file or video file, and time for starting capturing the audio file or video file.

The play path of the audio file or video file includes, but is not limited to, a path for storing the audio file or video file in the mobile phone. The source file name of the audio file or video file includes, but is not limited to, a file name of the audio file or video file when the audio file or video file is downloaded, duplicated, or copied. For example, the source file name of a video file is VIDEO-2010-08-08-06-06-55.3gp.

It should be noted that step A03 may be performed after step A01. Alternatively, step A03 may also be performed before step A01, or step A03 may also be performed in the process of performing step A01.

Alternatively, after step A03, the method further includes saving a parameter obtained in step A03. For example, the time for starting capturing the audio file or video file is saved.

Alternatively, after step A05, the corresponding processor, or corresponding module, or corresponding unit, or corresponding chip of the mobile phone performs step A07, which is specifically as follows:
Step A07: Obtain time for stopping capturing the audio file or video file, and generate the captured audio file or video file by using an algorithm for capturing the audio file or video file according to the time for starting capturing the audio file or video file and the time for stopping capturing the audio file or video file.

Alternatively, after step A07, the corresponding processor, or corresponding module, or corresponding unit, or corresponding chip of the mobile phone performs step A09, which is specifically as follows:
Step A09: Rename the generated captured audio file or video file according to the source file name of the audio file or video file, and modify an attribute of at least one of the captured audio file or video file , or a folder to which the captured audio file or video file belongs.

The file name of the captured audio file or video file saved may be renamed based on the file name of an original audio file or video file. For example, a letter or a number may be added to or removed from the file name of the original audio file or video file. After the renaming step is added, a user may conveniently identify a relationship between the captured audio file or video file and the audio file or video file before capturing. Further, an attribute of the captured audio file or video file may be modified. For example, a read-only attribute of the captured audio file or video file may be changed to a read/write attribute. After the step of modifying an attribute is added, the attribute of the captured audio file or video file may be adjusted, thereby facilitating application and further processing.

With the method for capturing an audio or a video according to the embodiment of the present invention, an audio file or a video file can be captured simply and conveniently, and no major modification made to the user interface of the mobile phone is required, so that the technology is easy to implement, thereby reducing operation steps for a user and making operations easier for a user.

A third embodiment provided by the present invention provides a mobile phone, including:
First, an application scenario is the same as that of the first and second embodiments, and details are not described repeatedly herein. It should be noted that in this embodiment, the mobile phone should at least have a touchscreen or at least one of a physical trackball, a navigation key, or a key in another shape and having functions of a trackball should be configured for the mobile phone. There is a control relationship between the configured physical trackball or navigation key or the key in another shape and having functions of a trackball and a front end displaying a play progress of a player on the display screen of the mobile phone. That is, when the configured physical trackball or navigation key or the key in another shape and having functions of a trackball is long pressed, it is equivalent to that the front end displaying the play progress of the player on the display screen of the mobile phone is long pressed.

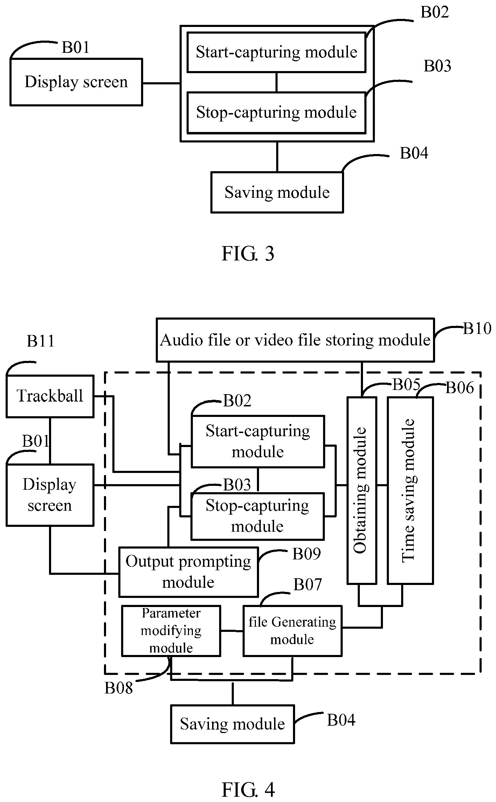

As shown in FIG. 3, the mobile phone includes the following modules:
a display screen B01, configured to display an application interface and/or receive an operation;
a start-capturing module B02, configured to: in a process of playing an audio file or a video file, when a long-press event on a trackball displaying a play progress on the display screen B01 is received, start capturing the audio file or video file;
a stop-capturing module B03, configured to: in a process of capturing the audio file or video file, when a long-press event on the trackball displaying a play progress is received, stop capturing; and
a saving module B04, configured to save the captured audio file or video file.

Reference may be made to the relevant content of the first embodiment and the second embodiment for the specific operation process of the modules, and details are not described repeatedly herein.

With the mobile phone provided in the embodiment, an audio file or a video file can be captured simply and conveniently, and no major modification made to the user interface of the mobile phone is required, so that the technology is easy to implement, thereby reducing operation steps for a user and making operations easier for a user.

A fourth embodiment provided by the present invention provides another mobile phone, including:
First, an application scenario is the same as that of the first, second, and third embodiments, and details are not described repeatedly herein.

As shown in FIG. 4, module B01 to module B04 are the same as those of the third embodiment, and details are not described repeatedly herein.

Alternatively, the mobile phone further includes:
an obtaining module B05, configured to obtain at least one of a play identifier of the audio file or video file, a play path of the audio file or video file, a source file name of the audio file or video file, time for starting capturing the audio file or video file, and time for stopping capturing the audio file or video file.

Alternatively, the mobile phone further includes:
a time saving module B06, configured to save the time for starting capturing the audio file or video file and the time for stopping capturing the audio file or video file.

Alternatively, the mobile phone further includes:
The mobile phone at least includes any one of the following modules:
   an output prompting module B09, configured to output a capture prompt;
   a file generating module B07, configured to generate the captured audio file or video file by using an algorithm for capturing the audio file or video file according to the time for starting capturing the audio file or video file and the time for stopping capturing the audio file or video file; and
   a parameter modifying module B08, configured to rename the generated captured audio file or video file according to the source file name of the audio file or video file, and modify an attribute of at least one of the captured audio file or video file, or a folder to which the captured audio file or video file belongs.

Alternatively, the mobile phone further includes:
an audio file or video file storing module B10, configured to store the audio file or video file; and
a trackball B11, configured to receive a user's operation and perform corresponding processing. The trackball is connected to the display screen B01. The trackball B11 is further configured to directly control a front end displaying a progress of the audio file or video file played on a display screen. Long pressing the trackball B11 is equivalent to long pressing the front end displaying the progress of the audio file or video file played on the display screen. The connection relationship between the trackball B11 and other entities or modules is at least shown in FIG. 4.

As shown in FIG. 5, alternatively, the output prompting module B09 at least includes any one of the following modules:
a first output prompting module B091, configured to display a capture progress on the display screen of the mobile phone;
a second output prompting module B092, configured to display a capture state on the display screen of the mobile phone; and
a third output prompting module B093, configured to change a color of the trackball before and after starting capturing.

Reference may be made to the content of the first embodiment and the second embodiment for the implementation methods of the above modules.

It should be noted that the output prompting module B09 is an optional module. However, this module may be added to make the user interface of the mobile phone more user-friendly, thereby enhancing user experience.

The trackball B11 is an optional component. However, the trackball B11 may be added to enable a mobile phone without a touchscreen to capture an audio file or a video file simply and conveniently, and no major modification made to the user interface of the mobile phone is required, so that the technology is easy to implement, thereby reducing operation steps for a user and making operations easier for a user. Even if the trackball B11 is added to a touchscreen mobile phone, another selection is provided for a user who is not accustomed to touchscreen operations, thereby making operations of the mobile phone easier and enhancing the selling point of the mobile phone at the same time.

The first output prompting module B091, the second output prompting module B092, and the third output prompting module B093 are optional modules. However, any one of the modules may be included to enhance the human-machine interaction effect of the user interface of the mobile phone.

Persons skilled in the art may understand that the accompanying drawings are merely schematic diagrams of exemplary embodiments, and that the modules, entities, or processes in the accompanying drawings are not necessarily required for implementing the present invention.

Persons skilled in the art may understand that the modules, entities, or components of the mobile phone in the embodiments may be distributed in the mobile phone of the embodiments according to the description of the embodiments, and that corresponding changes may also be made for locating them in one or more devices different from the embodiments. The modules or entities in the embodiment may be combined into one module or entity, or may be further divided into multiple submodules or entities.

The sequence numbers of the above embodiments of the present invention are used merely for description, and do not represent the preference of the embodiments.

Through the foregoing description of the implementation, it is clear to persons skilled in the art that the present invention may be implemented through hardware, or through software plus a necessary universal hardware platform. Based on such understanding, the technical solutions of the present invention may be implemented in the form of a software product. The software product may be stored in one nonvolatile storage media (for example, a CD-ROM, a USB flash drive, or a removable hard disk) and include several instructions for instructing a computer device (which may be a personal computer, a server, or a network device) to perform the methods described in the embodiments of the present invention.

The foregoing description is merely about exemplary specific embodiments of the present invention, but is not intended to limit the protection scope of the present invention. Any variation or replacement figured out by persons skilled in the art within the technical scope disclosed in the present invention shall fall within the protection scope of the present invention. Therefore, the protection scope of the present invention shall be subject to the protection scope of the claims.

## Claims

1. A method for capturing an audio file or a video file in a mobile phone, comprising:
in a process of playing an audio file or a video file, when a long-press event on a trackball displaying a play progress is received, starting capturing the audio file or video file (A01);
in a process of capturing the audio file or video file, when a long-press event on the trackball displaying a play progress is received, stopping capturing (A05);
saving (A11) the captured audio file or video file; when starting capturing the audio file or video file or in the process of starting capturing the audio file or video file, the method further comprises: outputting a capture prompt, wherein the capture prompt comprises at least one of changing a color of the trackball before and after starting capturing, displaying a capture progress on a display screen (B01) of the mobile phone, or displaying a capture state on the display screen (B01) of the mobile phone, and
wherein before the starting capturing the audio file or video file, or after the starting capturing the audio file or video file, or in a process of starting capturing the audio file or video file, the method further comprises:
obtaining (A03) at least one of a play identifier of the audio file or video file, a play path of the audio file or video file, a source file name of the audio file or video file, and time for starting capturing the audio file or video file.

2. The method according to claim 1, wherein
before the starting capturing the audio file or video file, or after the starting capturing the audio file or video file, or in the process of starting capturing the audio file or video file, the method further comprises:
saving the time for starting capturing the audio file or video file; and
in the process of capturing the audio file or video file, when a long-press event on the trackball of a mobile phone is received, and after stopping capturing, the method further comprises:
saving time for stopping capturing the audio file or video file.

3. The method according to claim 1, wherein before the saving the captured audio file or video file, the method further comprises:
obtaining the time for stopping capturing the audio file or video file, and generating the captured audio file or video file by using an algorithm for capturing the audio file or video file according to the time for starting capturing the audio file or video file and the time for stopping capturing the audio file or video file.

4. The method according to claim 3, wherein after the obtaining the time for stopping capturing the audio file or video file and generating the captured audio file or video file by using the algorithm for capturing the audio file or video file according to the time for starting capturing the audio file or video file and the time for stopping capturing the audio file or video file, the method further comprises:
renaming the generated captured audio file or video file according to the source file name of the audio file or video file, and modifying an attribute of at least one of the captured audio file or video file , or a folder to which the captured audio file or video file belongs.

5. A mobile phone, comprising:
a display screen (B01), configured to display an application interface and/or receive an operation;
a start-capturing module (B02), configured to: in a process of playing an audio file or a video file, when a long-press event on a trackball displaying a play progress on the display screen is received, start capturing the audio file or video file;
a stop-capturing module (B03), configured to: in a process of capturing the audio file or video file, when a long-press event on the trackball displaying a play progress is received, stop capturing; and
a saving module (B04), configured to save the captured audio file or video file; an output prompting module (B09), configured to output a capture prompt;
wherein the output prompting module (B09) at least comprises any one of following modules:
a first output prompting module (B091), configured to display a capture progress on the display screen (B01) of the mobile phone;
a second output prompting module (B092), configured to display a capture state on the display screen (B01) of the mobile phone;
a third output prompting module (B093), configured to change a color of the trackball before and after starting capturing, and
wherein the mobile phone further comprises:
an obtaining module (B05), configured to obtain at least one of a play identifier of the audio file or video file, a play path of the audio file or video file, a source file name of the audio file or video file, time for starting capturing the audio file or video file, and time for stopping capturing the audio file or video file.

6. The mobile phone according to claim 5, wherein the mobile phone further comprises:
a time saving module (B06), configured to save the time for starting capturing the audio file or video file and the time for stopping capturing the audio file or video file.

7. The mobile phone according to claim 5 or 6, wherein the mobile phone at least comprises any one of following modules:
a file generating module (B07), configured to generate the captured audio file or video file by using an algorithm for capturing the audio file or video file according to the time for starting capturing the audio file or video file and the time for stopping capturing the audio file or video file; and
a parameter modifying module (B08), configured to rename the generated captured audio file or video file according to the source file name of the audio file or video file, and modify an attribute of at least one of the captured audio file or video file, or a folder to which the captured audio file or video file belongs.

## Patentansprüche

1. Verfahren zum Aufzeichnen einer Audiodatei oder einer Videodatei in einem Mobiltelefon, das Folgendes umfasst:
Beginnen mit dem Aufzeichnen der Audiodatei oder der Videodatei in einem Prozess des Abspielens einer Audiodatei oder einer Videodatei, wenn ein Langes-Drücken-Ereignis auf einem Trackball, der einen Abspielfortschritt anzeigt, empfangen wird (A01);
Aufhören mit dem Aufzeichnen in einem Prozess des Aufzeichnens der Audiodatei oder der Videodatei, wenn ein Langes-Drücken-Ereignis auf dem Trackball, der einen Abspielfortschritt anzeigt, empfangen wird (A05);
Speichern (A11) der aufgezeichneten Audiodatei oder Videodatei; wenn mit dem Aufzeichnen der Audiodatei oder der Videodatei begonnen wird, oder in dem Prozess des Beginnens mit dem Aufzeichnen der Audiodatei oder der Videodatei umfasst das Verfahren ferner Folgendes: Ausgeben einer Aufzeichnungsmeldung, wobei die Aufzeichnungsmeldung Ändern einer Farbe des Trackballs vor und nach dem Beginnen mit dem Aufzeichnen und/oder Anzeigen eines Aufzeichnungsfortschritts auf einem Anzeigebildschirm (B01) des Mobiltelefons und/oder Anzeigen eines Aufzeichnungszustands auf dem Anzeigebildschirm (B01) des Mobiltelefons umfasst, und
wobei das Verfahren vor dem Beginnen mit dem Aufzeichnen der Audiodatei oder der Videodatei oder nach dem Beginnen mit dem Aufzeichnen der Audiodatei oder der Videodatei oder in einem Prozess des Beginnens mit dem Aufzeichnen der Audiodatei oder der Videodatei ferner Folgendes umfasst:
Erhalten (A03) einer Abspielkennzeichnung der Audiodatei oder der Videodatei und/oder eines Abspielpfads der Audiodatei oder der Videodatei und/oder eines Quellendateinamens der Audiodatei oder der Videodatei und/oder einer Zeit zum Beginnen mit dem Aufzeichnen der Audiodatei oder der Videodatei.

2. Verfahren nach Anspruch 1, wobei
das Verfahren vor dem Beginnen mit dem Aufzeichnen der Audiodatei oder der Videodatei oder nach dem Beginnen mit dem Aufzeichnen der Audiodatei oder der Videodatei oder in dem Prozess des Beginnens mit dem Aufzeichnen der Audiodatei oder der Videodatei ferner Folgendes umfasst:
Speichern der Zeit zum Beginnen mit dem Aufzeichnen der Audiodatei oder der Videodatei; und
das Verfahren in dem Prozess des Aufnehmens der Audiodatei oder der Videodatei, wenn ein Langes-Drücken-Ereignis auf dem Trackball eines Mobiltelefons empfangen wird, und nach dem Aufhören mit dem Aufzeichnen ferner Folgendes umfasst:
Speichern einer Zeit zum Aufhören mit dem Aufzeichnen der Audiodatei oder der Videodatei.

3. Verfahren nach Anspruch 1, wobei das Verfahren vor dem Speichern der aufgezeichneten Audiodatei oder Videodatei ferner Folgendes umfasst:
Erhalten der Zeit zum Aufhören mit dem Aufzeichnen der Audiodatei oder der Videodatei und Erzeugen der aufgezeichneten Audiodatei oder Videodatei durch Verwenden eines Algorithmus zum Aufzeichnen der Audiodatei oder der Videodatei gemäß der Zeit zum Beginnen mit dem Aufzeichnen der Audiodatei oder der Videodatei und der Zeit zum Aufhören mit dem Aufzeichnen der Audiodatei oder der Videodatei.

4. Verfahren nach Anspruch 3, wobei das Verfahren nach dem Erhalten der Zeit zum Aufhören mit dem Aufzeichnen der Audiodatei oder der Videodatei und dem Erzeugen der Audiodatei oder der Videodatei durch Verwenden des Algorithmus zum Aufzeichnen der Audiodatei oder der Videodatei gemäß der Zeit zum Beginnen mit dem Aufzeichnen der Audiodatei oder der Videodatei und der Zeit zum Aufhören mit dem Aufzeichnen der Audiodatei oder der Videodatei ferner Folgendes umfasst:
Umbenennen der erzeugten aufgezeichneten Audiodatei oder Videodatei gemäß dem Quellendateinamen der Audiodatei oder der Videodatei und Modifizieren eines Attributs der aufgezeichneten Audiodatei oder Videodatei und/oder eines Ordners, zu dem die aufgezeichnete Audiodatei oder Videodatei gehört.

5. Mobiltelefon, das Folgendes umfasst:
einen Anzeigebildschirm (B01), der zum Anzeigen einer Anwendungsoberfläche und/oder zum Empfangen einer Operation konfiguriert ist;
ein Beginn-Aufzeichnung-Modul (B02), das zu Folgendem konfiguriert ist: Beginnen mit dem Aufzeichnen der Audiodatei oder der Videodatei in einem Prozess des Abspielens einer Audiodatei oder einer Videodatei, wenn ein Langes-Drücken-Ereignis auf einem Trackball, der einen Abspielfortschritt auf dem Anzeigebildschirm anzeigt, empfangen wird;
ein Beende-Aufzeichnen-Modul (B03), das zu Folgendem konfiguriert ist: Aufhören mit dem Aufzeichnen in einem Prozess des Aufzeichnens der Audiodatei oder der Videodatei, wenn ein Langes-Drücken-Ereignis auf dem Trackball, der einen Abspielfortschritt anzeigt, empfangen wird; und
ein Speichermodul (B04), das zum Speichern der aufgezeichneten Audiodatei oder Videodatei konfiguriert ist; ein Ausgabemeldungsmodul (B09), das zum Ausgeben einer Aufzeichnungsmeldung konfiguriert ist;
wobei das Ausgabemeldungsmodul (B09) wenigstens ein beliebiges der folgenden Module umfasst:
ein erstes Ausgabemeldungsmodul (B091), das zum Anzeigen eines Aufzeichnungsfortschritts auf dem Anzeigebildschirm (B01) des Mobiltelefons konfiguriert ist;
ein zweites Ausgabemeldungsmodul (B092), das zum Anzeigen eines Aufzeichnungszustands auf dem Anzeigebildschirm (B01) des Mobiltelefons konfiguriert ist;
ein drittes Ausgabemeldungsmodul (B093), das zum Ändern einer Farbe des Trackballs vor und nach dem Beginnen mit dem Aufzeichnen konfiguriert ist, und wobei das Mobiltelefon ferner Folgendes umfasst:
ein Erhaltemodul (B05), das zum Erhalten einer Abspielkennzeichnung der Audiodatei oder der Videodatei und/oder eines Abspielpfads der Audiodatei oder der Videodatei und/oder eines Quellendateinamens der Audiodatei oder der Videodatei und/oder einer Zeit zum Beginnen mit dem Aufzeichnen der Audiodatei oder der Videodatei und/oder einer Zeit zum Aufhören mit dem Aufzeichnen der Audiodatei oder der Videodatei konfiguriert ist.

6. Mobiltelefon nach Anspruch 5, wobei das Mobiltelefon ferner Folgendes umfasst:
ein Zeitspeichermodul (B06), das zum Speichern der Zeit zum Beginnen mit dem Aufzeichnen der Audiodatei oder der Videodatei und der Zeit zum Aufhören mit dem Aufzeichnen der Audiodatei oder der Videodatei konfiguriert ist.

7. Mobiltelefon nach Anspruch 5 oder 6, wobei das Mobiltelefon wenigstens ein beliebiges der folgenden Module umfasst:
ein Dateierzeugungsmodul (B07), das zum Erzeugen der aufgezeichneten Audiodatei oder Videodatei durch Verwenden eines Algorithmus zum Aufzeichnen der Audiodatei oder der Videodatei gemäß der Zeit zum Beginnen mit dem Aufzeichnen der Audiodatei oder der Videodatei und der Zeit zum Aufhören mit dem Aufzeichnen der Audiodatei oder der Videodatei konfiguriert ist; und
ein Parametermodifizierungsmodul (B08), das zum Umbenennen der erzeugten aufgezeichneten Audiodatei oder Videodatei gemäß dem Quellendateinamen der Audiodatei oder der Videodatei und zum Modifizieren eines Attributs der aufgezeichneten Audiodatei oder Videodatei und/oder eines Ordners, zu dem die aufgezeichnete Audiodatei oder Videodatei gehört, konfiguriert ist.

## Revendications

1. Procédé de capture d'un fichier audio ou d'un fichier vidéo dans un téléphone mobile, le procédé comprenant :
au cours de la lecture d'un fichier audio ou d'un fichier vidéo, à la réception d'un événement de pression prolongée sur une boule de suivi affichant une progression de lecture, le déclenchement d'une capture du fichier audio ou du fichier vidéo (A01) ;
au cours de la capture du fichier audio ou du fichier vidéo, à la réception d'un événement de pression prolongée sur la boule de suivi affichant une progression de lecture, l'arrêt de la capture (A05) ;
la sauvegarde (A11) du fichier audio ou du fichier vidéo capturé; le procédé comprenant en outre, au déclenchement de la capture du fichier audio ou du fichier vidéo ou au cours du déclenchement de la capture du fichier audio ou du fichier vidéo : la fourniture d'un guide de capture, le guide de capture comprenant le changement d'une couleur de la boule de suivi avant et après le déclenchement de la capture, et/ou l'affichage d'une progression de la capture sur un écran d'affichage (B01) du téléphone mobile, et/ou l'affichage d'un état de la capture sur l'écran d'affichage (B01) du téléphone mobile, et
le procédé comprenant en outre, avant le déclenchement de la capture du fichier audio ou du fichier vidéo, ou après le déclenchement de la capture du fichier audio ou du fichier vidéo, ou au cours du déclenchement de la capture du fichier audio ou du fichier vidéo :
l'obtention (A03) d'un identificateur de lecture du fichier audio ou du fichier vidéo et/ou d'un chemin de lecture du fichier audio ou du fichier vidéo et/ou d'un nom de fichier source du fichier audio ou du fichier vidéo et/ou d'un temps de déclenchement de la capture du fichier audio ou du fichier vidéo.

2. Procédé selon la revendication 1,
le procédé comprenant en outre, avant le déclenchement de la capture du fichier audio ou du fichier vidéo, ou après le déclenchement de la capture du fichier audio ou du fichier vidéo, ou au cours du déclenchement de la capture du fichier audio ou du fichier vidéo :
la sauvegarde du temps de déclenchement de la capture du fichier audio ou du fichier vidéo ; et
le procédé comprenant en outre, au cours de la capture du fichier audio ou du fichier vidéo, à la réception d'un événement de pression prolongée sur la boule de suivi d'un téléphone mobile et après l'arrêt de la capture :
la sauvegarde d'un temps d'arrêt de la capture du fichier audio ou du fichier vidéo.

3. Procédé selon la revendication 1, le procédé comprenant en outre, avant la sauvegarde du fichier audio ou du fichier vidéo capturé :
l'obtention du temps d'arrêt de la capture du fichier audio ou du fichier vidéo, et la génération du fichier audio ou du fichier vidéo capturé à l'aide d'un algorithme de capture du fichier audio ou du fichier vidéo en fonction du temps de déclenchement de la capture du fichier audio ou du fichier vidéo et du temps d'arrêt de la capture du fichier audio ou du fichier vidéo.

4. Procédé selon la revendication 3, le procédé comprenant en outre, après l'obtention du temps d'arrêt de la capture du fichier audio ou du fichier vidéo et la génération du fichier audio ou du fichier vidéo capturé à l'aide de l'algorithme de capture du fichier audio ou du fichier vidéo en fonction du temps de déclenchement de la capture du fichier audio ou du fichier vidéo et du temps d'arrêt de la capture du fichier audio ou du fichier vidéo :
le renommage du fichier audio ou du fichier vidéo capturé généré en fonction du nom de fichier source du fichier audio ou du fichier vidéo, et la modification d'un attribut du fichier audio ou du fichier vidéo capturé et/ou d'un dossier auquel le fichier audio ou le fichier vidéo capturé appartient.

5. Téléphone mobile, comprenant :
un écran d'affichage (B01), configuré pour afficher une interface d'application et/ou recevoir une opération ;
un module de déclenchement de capture (B02), configuré pour : au cours de la lecture d'un fichier audio ou d'un fichier vidéo, à la réception d'un événement de pression prolongée sur une boule de suivi affichant une progression de lecture sur l'écran d'affichage, déclencher la capture du fichier audio ou du fichier vidéo ;
un module d'arrêt de capture (B03), configuré pour : au cours de la capture du fichier audio ou du fichier vidéo, à la réception d'un événement de pression prolongée sur la boule de suivi affichant une progression de lecture, arrêter la capture ; et
un module de sauvegarde (B04), configuré pour sauvegarder le fichier audio ou le fichier vidéo capturé ; un module de fourniture de guide (B09), configuré pour fournir un guide de capture ;
le module de fourniture de guide (B09) comprenant au moins l'un quelconque des modules suivants :
un premier module de fourniture de guide (B091), configuré pour afficher une progression de la capture sur l'écran d'affichage (B01) du téléphone mobile ;
un deuxième module de fourniture de guide (B092), configuré pour afficher un état de la capture sur l'écran d'affichage (B01) du téléphone mobile ;
un troisième module de fourniture de guide (B093), configuré pour changer une couleur de la boule de suivi avant et après le déclenchement de la capture, et
le téléphone mobile comprenant en outre :
un module d'obtention (B05), configuré pour obtenir un identificateur de lecture du fichier audio ou du fichier vidéo et/ou un chemin de lecture du fichier audio ou du fichier vidéo et/ou un nom de fichier source du fichier audio ou du fichier vidéo et/ou un temps de déclenchement de la capture du fichier audio ou du fichier vidéo.

6. Téléphone mobile selon la revendication 5, le téléphone mobile comprenant en outre :
un module de sauvegarde de temps (B06), configuré pour sauvegarder le temps de déclenchement de la capture du fichier audio ou du fichier vidéo et le temps d'arrêt de la capture du fichier audio ou du fichier vidéo.

7. Téléphone mobile selon la revendication 5 ou 6, le téléphone mobile comprenant au moins l'un quelconque des modules suivants :
un module de fichier (B07), configuré pour générer le fichier audio ou le fichier vidéo capturé à l'aide d'un algorithme de capture du fichier audio ou du fichier vidéo en fonction du temps de déclenchement de la capture du fichier audio ou du fichier vidéo et du temps d'arrêt de la capture du fichier audio ou du fichier vidéo ; et
un module de modification de paramètre (B08), configuré pour renommer le fichier audio ou le fichier vidéo capturé généré en fonction du nom de fichier source du fichier audio ou du fichier vidéo, et modifier un attribut du fichier audio ou du fichier vidéo capturé et/ou d'un dossier auquel le fichier audio ou le fichier vidéo capturé appartient.
